# EUROPÄISCHE PATENTANMELDUNG

(11) **EP 2 106 965 A1**
(43) Veröffentlichungstag der Anmeldung: **07.10.2009**
(21) Anmeldenummer: 09151943.9
(22) Anmeldetag: 03.02.2009
(51) Int. Cl.: B60N 2/60

(54) **Schutzbezug**

(30) Priorität: 02.04.2008 DE 202008004308 U
(71) Anmelder: MELITTA HAUSHALTSPRODUKTE GmbH & Co. Kommanditgesellschaft, D-32427 Minden (DE)
(72) Erfinder: Baumann, Ute, 32457 Porta Westfalica (DE); Langenhorst, Rebecca, 32423 Minden (DE); Napier, Sally-Ann, 32427 Minden (DE); Büsching, Christoph, 32427 Minden (DE); Duwe, Andreas, 85435 Erding (DE)
(74) Vertreter: Dantz, Jan Henning

(57) **Zusammenfassung**

Ein Schutzbezug, insbesondere für Kopfstützen, umfasst ein flächiges Material aus einem Vliesstoff und/oder einem Zellstoff, wobei an dem flächigen Material mindestens ein durch eine abziehbare Schutzschicht überdeckter Klebestreifen vorgesehen ist. Dadurch ist eine individuelle Befestigung, insbesondere auf Reisen, möglich.

## Beschreibung

Die vorliegende Erfindung betrifft einen Schutzbezug, insbesondere für Kopfstützen, mit einem flächigen Material aus einem Vliesstoff und/oder einem Zellstoff.

Es ist bekannt, dass Kopfstützen bei Sitzen in Zügen oder Flugzeugen oft recht unhygienisch sind und nur unregelmäßig gereinigt werden. Es gibt zwar Bezüge für Kopfstützen, die in der Regel vom Hersteller der Sitze geliefert werden, die dann gereinigt oder gewechselt werden. Dabei gibt es Hauben, die über eine Kopfstütze gezogen werden, wobei die Kontur der Haube an die Kopfstütze angepasst ist. Ein Reisender kann jedoch eine solche Haube nicht sinnvoll für seine Reise verwenden, da ein haubenförmiger Bezug einerseits an die Geometrie der Kopfstütze angepasst ist und andererseits es Sitze gibt, bei denen an gegenüberliegenden Seiten ein Reisender eine Kopfstütze vorfindet. Das Überziehen einer solchen Haube als Schutzbezug würde daher einen anderen Mitreisenden beeinträchtigen.

Es ist daher Aufgabe der vorliegenden Erfindung einen Schutzbezug zu schaffen, der von einem Reisenden auf einfache Weise an einer Kopfstütze angebracht werden kann.

Diese Aufgabe wird mit einem Schutzbezug mit den Merkmalen des Anspruches 1 gelöst.

Erfindungsgemäß ist an dem flächigen Material mindestens ein durch eine abziehbare Schutzschicht überdeckter Klebestreifen vorgesehen. Dadurch kann der Benutzer durch Abziehen der Schutzschicht den Klebestreifen zum Anbringen des Schutzbezuges verwenden. Der Benutzer kann den Schutzbezug individuell nach seinen Bedürfnissen an einer Kopfstütze oder einem anderen Bauteil befestigen, damit eine unhygienische Oberfläche überdeckt wird. Gerade für Reisende ergibt sich häufig das Problem, dass Sitzbezüge, insbesondere im Kopfbereich, verschmutzt sind und der Reisende nur die Wahl hat, einen anderen freien Sitz zu suchen oder den Kontakt mit der Verschmutzung in Kauf zu nehmen. Dem wird nun dadurch Einhalt geboten, dass ein individuell festlegbarer Schutzbezug geschaffen wird, der auf einfache Weise an einem Sitzbezug festklebbar ist.

Gemäß einer bevorzugten Ausgestaltung der Erfindung ist der mindestens eine Klebestreifen in einem Randbereich des flächigen Materials angeordnet. Dadurch ist es möglich, den Schutzbezug in einem oberen Bereich durch den Klebestreifen an einem Bezug zu fixieren, so dass das flächige Material an dem Klebestreifen hängend angeordnet werden kann. Dabei kann der Klebestreifen so ausgebildet sein, dass er an Sitzbezügen haftend fixierbar ist, wobei solche Sitzbezüge insbesondere aus einem Velours, Leder, Kunstleder oder Baumwolle bestehen. Der Klebstoff muss eine entsprechende Hafteigenschaft für unterschiedliche Materialien besitzen, wobei nach einem Lösen des Schutzbezuges keine Klebstoffreste an dem Sitzbezug verbleiben.

Gemäß einer weiteren Ausgestaltung der Erfindung sind mehrere Klebestreifen an dem flächigen Material vorgesehen. Insbesondere können zwei parallele benachbarte Klebestreifen in einem Randbereich des Flächenmaterials angeordnet sein. Dadurch kann einerseits die Hafteigenschaft verbessert werden, in dem der Schutzbezug mit mehr als einem Klebestreifen an einem Bezug fixiert wird. Die Klebestreifen können entweder benachbart in einem Randbereich angeordnet sein, aber auch eine umlaufende Ausbildung eines Klebestreifens ist möglich, so dass der Randbereich vollständig an einem Sitzbezug fixiert werden kann. Vorzugsweise ist jeder Klebestreifen durch eine eigene abziehbare Schutzschicht überdeckt, so dass der Benutzer selbst entscheiden kann, welche Klebestreifen er zur Anbringung des flächigen Materials verwenden will.

Damit der mindestens eine Klebestreifen ausreichende Hafteigenschaften besitzt, weist dieser vorzugsweise eine Breite zwischen 0,5 cm und 2 cm, insbesondere etwa 1 cm auf. Jeder Klebestreifen kann dabei durch eine abziehbare Schutzschicht überdeckt sein, der vorzugsweise aus einem Streifen Folie gebildet ist. Dies vereinfacht auch die Handhabung.

Damit das flächige Material für unterschiedliche Konturen eines Sitzbezuges geeignet ist, kann dieser eine im Wesentlichen rechteckige Kontur besitzen. Dabei kann das flächige Material eine Breite zwischen 25 cm und 40 cm, und eine Länge zwischen 30 cm und 50 cm aufweisen.

Als Material für den Schutzbezug eignet sich insbesondere ein Vliesstoff, der eine hohe Widerstandsfähigkeit aufweist und durch seine Dicke und Flauschigkeit einen gewissen Komfort bereitstellt. Das Flächengewicht des Vliesstoffes kann dabei zwischen 20 g/m² bis 60 g/m², vorzugsweise zwischen 30 g/m² bis 50 g/m² liegen. Als Material kommt insbesondere ein Spunbond aus Polypropylen in Frage, wobei auch andere Materialien, insbesondere mehrlagige Vliesstoffe oder Zellstoffe eingesetzt werden können.

Gemäß einer weiteren Ausgestaltung der Erfindung ist das flächige Material mit einer Kennzeichnung bedruckt. Diese Kennzeichnung kann entweder zur Werbung aber auch als Hinweis eingesetzt werden.

Die Erfindung wird nachfolgend anhand eines Ausführungsbeispieles im Detail beschrieben:
Ein Schutzbezug für eine Kopfstütze ist aus einem Spunbondvlies aus Polypropylen mit einem Flächengewicht von etwa 40 g/m² hergestellt. Das flächige Material besitzt eine Größe von 40 x 40 cm bis 50 x 40 cm. Das flächige Material kann mit einem Hinweis bedruckt sein.

Etwa 2 cm von einem oberen Rand des flächigen Materials ist ein erster 1 cm breiter Klebestreifen angebracht. Dieser Klebestreifen ist mit einer abziehbaren Schutzschicht überdeckt. Parallel zu dem oberen Klebestreifen ist im Abstand von etwa 1 cm ein zweiter 1 cm breiter Klebestreifen angebracht.

Der Benutzer kann im Rahmen einer Reise den ersten Klebestreifen verwenden, wobei die Schutzschicht abgezogen wird. Dann kann der Schutzbezug an der Kopfstütze an der gewünschten Position befestigt und benutzt werden. Verlässt der Reisende seinen Sitz kann der Schutzbezug wieder abgezogen werden, wobei der Klebestreifen so ausgebildet ist, dass keine Reste an dem Sitzbezug haften bleiben.

Der Benutzer kann nun den Schutzbezug umklappen, so dass der erste Klebestreifen mit dem flächigen Material überdeckt wird und dieser unbrauchbar wird. Anschließend kann der Schutzbezug weiter aufbewahrt werden.

Muss der Benutzer erneut einen Sitzbezug mit dem Schutzbezug überziehen, kann nun der zweite Klebestreifen eingesetzt werden, wobei hierfür wiederum die abziehbare Schutzschicht von dem zweiten Klebestreifen entfernt wird. Nach der Benutzung wird der Schutzbezug wiederum entfernt.

## Patentansprüche

1. Schutzbezug, insbesondere für Kopfstützen, mit einem flächigen Material aus einem Vliesstoff und/oder einem Zellstoff, **dadurch gekennzeichnet, dass** an dem flächigen Material mindestens ein durch eine abziehbare Schutzschicht überdeckter Klebestreifen vorgesehen ist.

2. Schutzbezug nach Anspruch 1, **dadurch gekennzeichnet, dass** der mindestens eine Klebestreifen in einem Randbereich des flächigen Materials angeordnet ist.

3. Schutzbezug nach Anspruch 1 oder 2, **dadurch gekennzeichnet, dass** der Klebestreifen so ausgebildet ist, dass er an Sitzbezügen haftend fixierbar ist.

4. Schutzbezug nach einem der Ansprüche 1 bis 3, **dadurch gekennzeichnet, dass** mehrere Klebestreifen an dem flächigen Material vorgesehen sind.

5. Schutzbezug nach Anspruch 4, **dadurch gekennzeichnet, dass** zwei parallele benachbarte Klebestreifen in einem Randbereich des flächigen Materials angeordnet sind.

6. Schutzbezug nach einem der Ansprüche 1 bis 5, **dadurch gekennzeichnet, dass** jeder Klebestreifen durch eine eigene abziehbare Schutzschicht überdeckt ist.

7. Schutzbezug nach einem der Ansprüche 1 bis 6, **dadurch gekennzeichnet, dass** der mindestens eine Klebestreifen eine Breite zwischen 0,5 cm und 2 cm, vorzugsweise etwas 1 cm aufweist.

8. Schutzbezug nach einem der Ansprüche 1 bis 7, **dadurch gekennzeichnet, dass** die abziehbare Schutzschicht aus einem Streifen Folie und/oder Papier gebildet ist.

9. Schutzbezug nach einem der Ansprüche 1 bis 8, **dadurch gekennzeichnet, dass** das flächige Material eine im Wesentlichen rechteckige Kontur aufweist.

10. Schutzbezug nach Anspruch 9, **dadurch gekennzeichnet, dass** das flächige Material eine Breite zwischen 25 cm und 40 cm und eine Länge zwischen 30 cm und 50 cm aufweist.

11. Schutzbezug nach einem der Ansprüche 1 bis 10, **dadurch gekennzeichnet, dass** das flächige Material aus einem Vliesstoff mit einem Flächengewicht zwischen 20 g/m² bis 60 g/m², vorzugsweise 30 g/m² bis 50 g/m² gebildet ist.

12. Schutzbezug nach einem der Ansprüche 1 bis 11, **dadurch gekennzeichnet, dass** der Vliesstoff ein Spunbond aus Polypropylen aufweist.

13. Schutzbezug nach einem der Ansprüche 1 bis 12, **dadurch gekennzeichnet, dass** der Vliesstoff ein Meltblown aus Polypropylen aufweist.

14. Schutzbezug nach einem der Ansprüche 1 bis 13, **dadurch gekennzeichnet, dass** das flächige Material mit einer Kennzeichnung bedruckt ist.
